# DEMANDE DE BREVET EUROPEEN

(11) **EP 1 813 163 A1**
(43) Date de publication de la demande: **01.08.2007**
(21) Numéro de dépôt: 06026401.7
(22) Date de dépôt: 20.12.2006
(51) Int. Cl.: A43C 7/08, F16G 11/10

(54) **Dispositif de blocage de brins souples**

(30) Priorité: 25.01.2006 FR 0600694
(71) Demandeur: Salomon S.A., 74370 Metz-Tessy (FR)
(72) Inventeur: Borsoi, Bruno, 31029 Vittorio Venetto (Treviso) (IT)

(57) **Abrégé**

Dispositif de blocage (15) agissant pour au moins un fil (10), le dispositif (15) comportant un corps (18) dont une première cavité (33) définit un premier chemin de passage (34) pour le fil (10), le dispositif (15) comprenant un premier organe de blocage (37), un premier moyen de guidage (38) du premier organe de blocage (37) relativement au corps (18), et un premier moyen élastique (39) prévu pour solliciter le premier organe de blocage (37) dans un sens d'appui sur le brin de fil (10) dans le chemin (34), le dispositif fonctionnant par coopération du premier organe de blocage (37) avec le premier chemin (34) pour le blocage du brin de fil (10) par effet de coincement.

La première cavité (33) est ouverte, de façon à permettre l'introduction ou le dégagement du brin de fil (10) dans une direction autre que celle du chemin (34).

## Description

L'invention concerne un dispositif mécanique de blocage de brins souples tels que des câbles, des cordes, des fils, des lacets, ou tout autre produit présenté sous un aspect similaire.

L'invention a trait plus particulièrement au blocage des lacets de chaussures en vue du serrage de celles-ci. Ainsi l'invention se rapporte aussi à une chaussure équipée avec un dispositif de blocage, ou à un système de serrage à lacet équipé avec un dispositif de blocage.

L'invention concerne plus particulièrement encore le domaine du sport, et notamment les chaussures de surf sur neige ou snowboard, de ski de piste, de ski de fond, de patin à roues ou à lame, de vélo, de randonnée, de marche, ou autre, ainsi que des systèmes de serrage de fixations, des articles tels que des sacs à dos comportant de tels brins, en vue du serrage et/ou de la compression de ces produits ou de parties de ceux-ci.

Il est connu de bloquer des brins souples à l'aide d'un dispositif.

Par exemple le document FR 2 827 486 divulgue un dispositif de blocage agissant pour au moins un fil. Le dispositif comporte un corps dont une cavité définit un chemin de passage pour le fil, le dispositif comprenant un organe de blocage, un moyen de guidage de l'organe de blocage relativement au corps, et un moyen élastique. Ce dernier sollicite l'organe de blocage dans un sens d'appui sur le fil dans le chemin. Le dispositif selon le document FR 2 827 486 fonctionne par coopération de l'organe de blocage avec le chemin, pour le blocage du fil par effet de coincement. Bien entendu le fil se bloque dans un sens dit de coincement, et glisse librement relativement au corps dans le sens opposé au sens de coincement. Le blocage est d'autant plus fort que la traction sur le fil est élevée. Ainsi ce dispositif garantit le maintien stable du fil lors d'une traction, et évite toute libération intempestive. Si ce dispositif est utilisé sur une chaussure, la tige de cette dernière reste serrée pendant l'utilisation. La libération du fil est obtenue par action manuelle sur un bouton associé à l'organe de blocage, combinée à une sollicitation également manuelle de parties serrées par le dispositif. Par exemple si le dispositif est utilisé pour serrer la tige d'une chaussure, il faut actionner le bouton de déblocage tout en écartant des quartiers de la tige. L'écartement entraîne le déplacement du fil, par rapport au corps, dans un sens inverse au sens de coincement. Le desserrage de l'objet serré n'est pas immédiat. Les manipulations qui conduisent au desserrage total de l'objet prennent du temps, et nécessitent un apprentissage gestuel. En d'autres termes le desserrage d'un objet, serré avec le dispositif selon le document FR 2 827 486, est un peu long et compliqué.

Par rapport à cela, l'un des buts de l'invention est de proposer un dispositif de blocage amélioré. Notamment, l'un des buts est de rendre le serrage ou le desserrage d'un objet plus rapide. Un autre but de l'invention est de rendre le serrage ou le desserrage d'un objet plus simple.

Plus particulièrement encore, un but de l'invention est de faciliter le serrage et le desserrage d'une chaussure, tant au niveau du temps nécessaire que des manipulations à effectuer.

Ainsi l'invention propose un dispositif de blocage agissant pour au moins un fil, le dispositif comportant un corps dont une première cavité définit un premier chemin de passage pour le fil, le dispositif comprenant un premier organe de blocage, un premier moyen de guidage du premier organe de blocage relativement au corps, et un premier moyen élastique prévu pour solliciter le premier organe de blocage dans un sens d'appui sur le brin de fil dans le chemin, le dispositif fonctionnant par coopération du premier organe de blocage avec le premier chemin pour le blocage du brin de fil par effet de coincement.

Le dispositif de blocage selon l'invention est caractérisé par le fait que la première cavité est ouverte, de façon à permettre l'introduction ou le dégagement du brin de fil dans une direction autre que celle du chemin.

Il est donc possible de dégager le brin de fil en dehors du dispositif, sans avoir à le faire glisser le long du chemin. Le dégagement se fait sans qu'il soit nécessaire de solliciter un organe du dispositif, ou sans qu'il soit nécessaire de déplacer ou de solliciter des parties d'un objet associé au dispositif de blocage.

En fait le dégagement du brin de fil se fait par simple action manuelle sur le fil lui-même, à l'exclusion d'une autre action.

Bien entendu le fil n'est plus maintenu par le dispositif dès lors qu'il en est dégagé. Le corollaire est que l'objet associé au dispositif n'est plus fermé ou serré quand le fil est dégagé. C'est vérifié notamment dans le cas d'une chaussure.

Des avantages qui découlent de ces dispositions sont, notamment, la rapidité et la simplicité du desserrage d'un objet associé ou comprenant un dispositif selon l'invention.

Le serrage est également rapide et simple.

D'autres caractéristiques et avantages de l'invention seront mieux compris à l'aide de la description qui va suivre, en regard du dessin annexé illustrant, selon une forme de réalisation non limitative, comment l'invention peut être réalisée, et dans lequel :
- la figure 1 est une vue d'ensemble d'une chaussure comportant, notamment, des fils et des dispositifs de blocage selon la forme de réalisation décrite de l'invention,
- la figure 2 est une vue du côté des faces libres de deux dispositifs associés à la chaussure,
- la figure 3 est une vue en perspective des dispositifs associés à la chaussure,
- la figure 4 est une coupe dans un plan parallèle à une face d'appui des dispositifs, selon IV-IV de la figure 3,
- la figure 5 est une vue des faces d'appui des dispositifs, selon V-V de la figure 3,
- la figure 6 est une coupe selon VI-VI de la figure 2.

Bien que la forme de réalisation décrite après se rapporte plutôt au domaine du snowboard, il doit être compris qu'elle s'applique aussi à d'autres domaines comme évoqué avant.

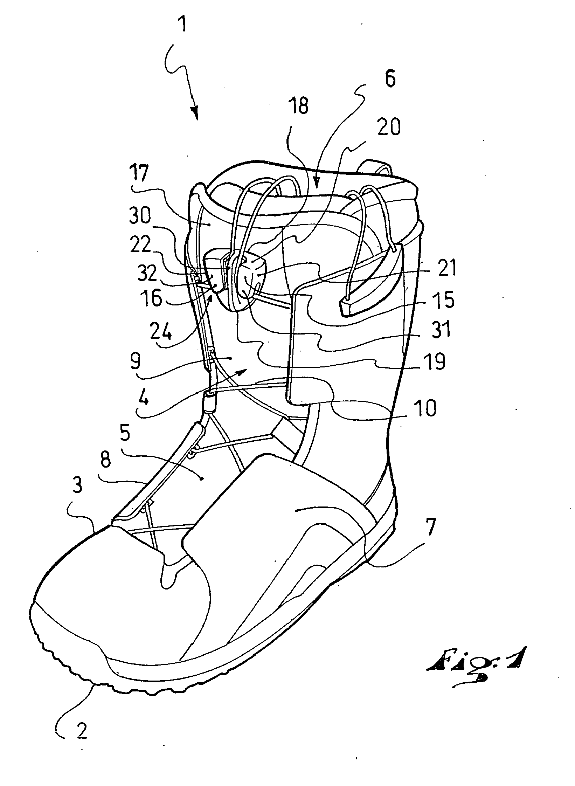

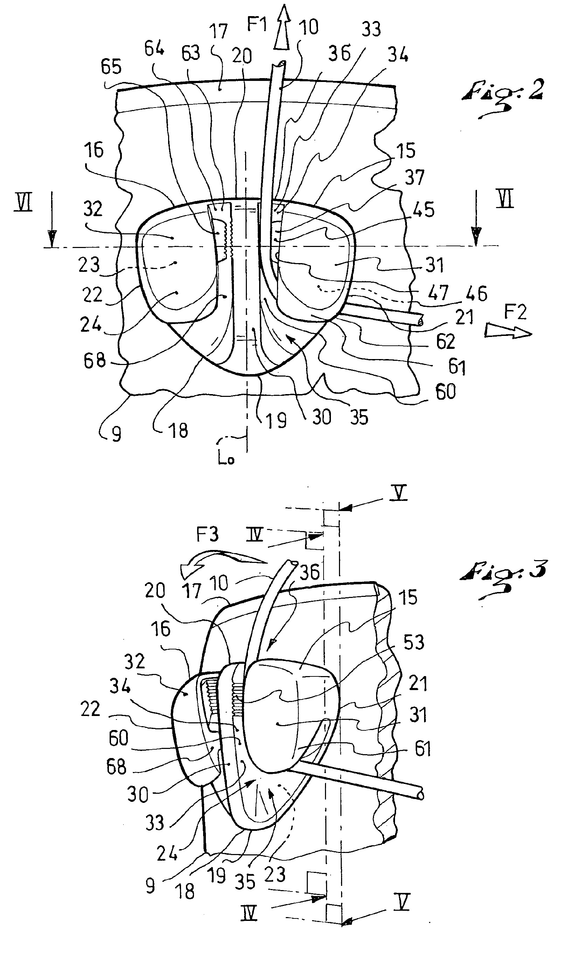

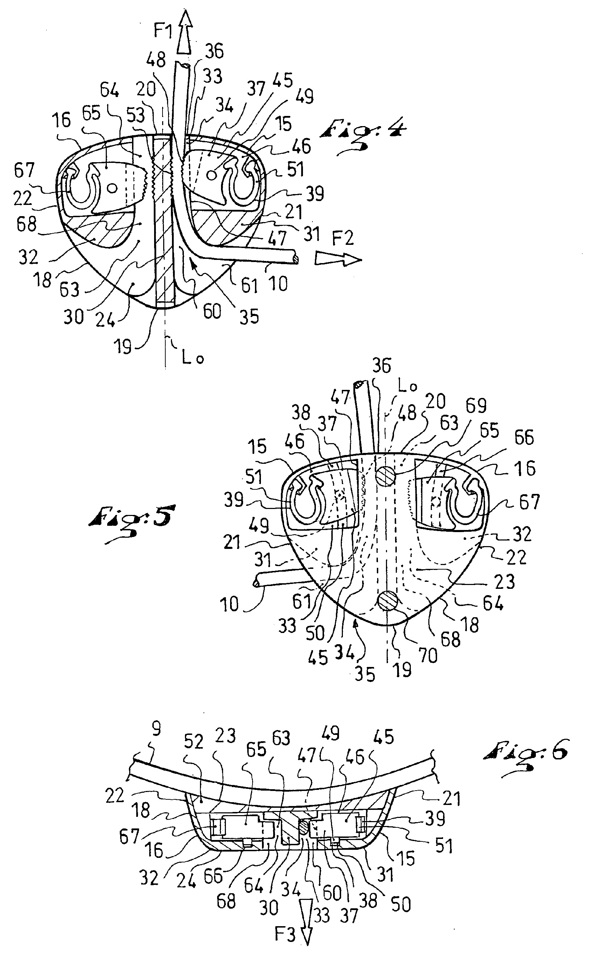

La forme de réalisation décrite est présentée à l'aide des figures 1 à 6.

Comme le montre la figure 1, une chaussure de snowboard 1 comprend une semelle de marche 2 surmontée d'une tige 3. Une ouverture 4 de la tige 3 présente une fente 5 disposée longitudinalement et reliée à une ouverture supérieure circulaire 6. La fente 5 sépare un quartier latéral 7 d'un quartier médial 8 de la tige 3, ce qui permet un chaussage ou un déchaussage par éloignement puis rapprochement relatif des quartiers 7, 8. L'ouverture circulaire 6 sert de passage au bas de jambe d'un utilisateur. En complément, une languette 9 est prévue pour obturer la fente 5.

Pour serrer ou desserrer la tige 3, il est prévu un moyen de serrage réversible. Celui-ci comprend un fil ou lacet 10 qui contribue à rapprocher ou, au contraire, à laisser s'éloigner l'un de l'autre, les quartiers latéral 7 et médial 8. Le lacet 10 suit un parcours au niveau de la fente 5, entre les quartiers 7, 8. Des passants 11 disposés de chaque côté de la fente, sur les bords des quartiers 7, 8, sont prévus pour guider le lacet 10.

Le moyen de serrage de la tige 3 comprend également un premier 15 et un deuxième 16 dispositifs de blocage du lacet 10. Ces dispositifs sont solidarisés l'un à l'autre, comme on le verra mieux par la suite. Les dispositifs 15, 16 sont par exemple assujettis à la languette 9 par tout moyen, tel qu'un vissage, un rivetage, un collage, une couture, ou autre.

Plus précisément, les dispositifs de blocage 15, 16 se situent vers une extrémité libre 17 de la languette. Cela permet, on le comprendra mieux par la suite, une manipulation plus aisée du moyen de serrage de la tige 3. Cependant il pourrait alternativement être prévu que les dispositifs de blocage 15, 16 soient situés ailleurs sur la languette 9, ou bien assujettis à la tige 3 par exemple au niveau des quartiers, indépendamment ou ensemble.

Selon l'invention comme le montrent notamment les figures 2 et 3, les dispositifs de blocage 15, 16 comprennent une pièce commune appelée corps 18. Celui-ci s'étend au niveau des deux dispositifs 15, 16 pour faciliter la fabrication de la chaussure. Le deuxième dispositif 16 est associé, ou solidarisé au premier 15 par le corps 18. Cela revient à dire que le premier dispositif 15 est solidarisé au deuxième 16 par le corps 18. Il peut bien sûr être alternativement prévu que les dispositifs 15, 16 comprennent chacun un corps séparé.

Le corps 18 s'étend longitudinalement entre une première extrémité 19 et une deuxième extrémité 20, transversalement entre un premier bord 21 et un deuxième bord 22, et en hauteur entre une face d'appui 23 et une face libre 24. La face d'appui est prévue pour être assujettie à la tige 3, en l'occurrence à la languette 9. Par corollaire la face libre 24 est directement accessible à l'extérieur de la tige 3.

Le corps 18 et les dispositifs 15, 16 sont symétriques par rapport à un axe longitudinal central Lo du corps 18.

Ainsi le corps 18 comprend une arête longitudinale centrale 30, qui fait saillie du côté de la face libre 24. Le corps 18 comprend encore un premier îlot 31 du côté du premier bord 21, ainsi qu'un deuxième îlot 32 du côté du deuxième bord 22. Les îlots 31, 32 sont symétriques selon l'axe longitudinal Lo, mais ils pourraient ne pas l'être.

Le premier dispositif de blocage 15 comprend le premier îlot 31 et une portion de l'arête 30 en regard de l'îlot. Par analogie, le deuxième dispositif de blocage 16 comprend le deuxième îlot 32 et une portion de l'arête 30 en regard de l'îlot.

Pour des raisons de commodité, étant donné que les dispositifs de blocage 15, 16 sont agencés de la même façon, seul l'un d'eux est décrit en détail ci-après. Par exemple le premier 15.

Comme on le comprend à l'aide de l'ensemble des figures 1 à 6, le premier dispositif de blocage 15 présente une première cavité 33 qui s'étend depuis la première extrémité 19 jusqu'à la deuxième extrémité 20, entre l'arête longitudinale 30 et le premier îlot 31. La première cavité 33 s'étend aussi le long de la face d'appui 23, cette dernière définissant le fond de la cavité 33. Ainsi la première cavité 33 définit un premier chemin de passage 34 pour le fil ou lacet 10. Le chemin de passage 34 est délimité longitudinalement par une première ouverture 35, vers la première extrémité 19, ainsi que par une deuxième ouverture 36, vers la deuxième extrémité 20. Ainsi le lacet 10 peut coulisser dans le chemin 34, entre les ouvertures 35, 36, parallèlement à la face d'appui 23.

Pour permettre une immobilisation temporaire du lacet 10 dans le chemin 34, dans un sens parallèle au chemin ou à la face d'appui 23, il est prévu un premier moyen de blocage. Ce dernier permet un glissement dans un sens de serrage de la chaussure 1 par le lacet 10, et s'oppose à un glissement du lacet dans un sens de desserrage. Ici le sens de glissement va, comme on le comprendra mieux par la suite, de la première extrémité 19 vers la deuxième extrémité 20 du corps 18. Bien entendu le sens inverse, celui de blocage, est orienté depuis la deuxième extrémité 20 vers la première 19.

Le premier moyen de blocage comprend un premier organe de blocage 37, un premier moyen de guidage 38 du premier organe de blocage 37 relativement au corps 18, et un premier moyen élastique 39 prévu pour solliciter le premier organe de blocage 37 dans un sens d'appui sur le brin de fil 10 dans le premier chemin de passage 34.

L'organe de blocage 37 comprend par exemple un secteur 45 logé dans une cavité ouverte 46 du premier îlot 31. Le secteur 45 fait saillie depuis la cavité 46 dans le premier chemin 34, par une ouverture 47 de l'îlot 31. Le secteur 45 présente une denture 48 prévue pour appuyer sur le lacet 10.

Le premier moyen de guidage 38, quant à lui, comprend un pion 49 issu du secteur 45, ainsi qu'un guide 50 ménagé dans la cavité 46 de l'îlot 31, le guide étant prévu pour recevoir et guider le pion 49. Ce dernier 49 est représenté sous la forme d'un cylindre, et forme avec le secteur 45 une pièce monobloc. Cependant il peut alternativement être prévu d'autres formes de pion, comme celle d'une languette, ainsi que d'autres moyens de solidarisation au secteur 45, comme un emboîtement.

Le guide 50 est réalisé sous la forme d'une rainure ménagée dans la face libre 24, en regard de la cavité 46 du premier îlot 31. La rainure 50 s'étend dans la cavité 46 de l'îlot 31 de façon que, depuis la deuxième extrémité 20, elle 50 se rapproche de l'arête 30 lorsqu'on s'éloigne de l'extrémité. En d'autres termes, depuis la deuxième extrémité 20 vers la première 19, le guide 50 dirige le pion 49 vers l'arête centrale 30. En conséquence le guide 50 dirige aussi le secteur 45 vers l'arête 30. La rainure est légèrement incurvée, mais elle peut aussi être droite.

Enfin le premier moyen élastique 39 sollicite en permanence l'organe de blocage, et donc le secteur 45, dans un sens d'éloignement de la deuxième extrémité 20 et dans un sens de rapprochement de l'arête 30 ou du premier chemin 34. En d'autres termes le premier moyen élastique 39 sollicite l'organe de blocage dans un sens de blocage du lacet 10. Le premier moyen élastique 39 comprend un ressort 51, dont la forme générale est celle d'un C. Le ressort s'étend dans la cavité 46 du premier îlot 31, entre le premier bord 21 et le secteur 45. Le ressort 51 est emboîté dans le premier bord 21 et dans le secteur 45. Le ressort 51 et le secteur 45 sont donc deux pièces distinctes. Cependant il peut alternativement être prévu que le ressort 51 et le secteur 45 forment une pièce monobloc.

Pour assembler le premier dispositif 15, le secteur 45 et le ressort 51 sont introduits dans la cavité 46 de l'îlot 31 du côté de la face d'appui 23. Afin d'assurer une cohésion au premier dispositif 15, il est prévu un capot de fermeture 52 de la cavité 46 du côté de la face d'appui 23. Ce dernier est assujetti au corps 18 par tout moyen. Par exemple, il peut y être solidarisé par emboîtement, par collage, ou autre. Le ressort 51 pousse le secteur 45 vers l'arête 30. Ainsi le lacet 10 est toujours pincé entre le secteur 45 et l'arête 30. Si le lacet 10 est sollicité selon la flèche F1 pour glisser depuis la première extrémité 19 vers la deuxième 20, le secteur 45 est entraîné vers la deuxième extrémité 20 et dans un sens d'éloignement de l'arête 30 en étant guidé par la rainure 50. Le pincement du lacet est minimal et celui-ci glisse facilement. La chaussure se serre.

A l'inverse si le lacet 10 est sollicité selon la flèche F2 dans un sens de desserrage, qui va de la deuxième extrémité 20 vers la première 19, le secteur 45 est entraîné vers la première extrémité 19 et dans un sens de rapprochement de l'arête 30 par la rainure 50. Ainsi la section du chemin 34 se réduit à la hauteur du secteur 45. Le pincement du lacet 10 devient très fort. En fait le lacet se bloque entre l'arête et le secteur 45. Le blocage est d'autant plus fort que la traction sur le lacet est grande. De plus, pour améliorer encore l'effet de coincement, l'arête 30 présente une denture 53 en regard du secteur 45.

S'il veut desserrer le premier dispositif de blocage 15, l'utilisateur doit agir sur le lacet 10. En effet, le dispositif de blocage 15 ne comporte pas d'organe de commande de déverrouillage. Il n'est pas possible d'agir manuellement sur le dispositif 15 pour desserrer la chaussure. En conséquence une première ouverture de dégagement 60 est ménagée dans le corps 18. L'ouverture 60 se présente sous la forme d'une entaille faite dans la face libre 24. De ce fait l'ouverture 60 est parallèle à l'arête 30, et longe la première cavité 37 ainsi que le premier chemin de passage 34. En d'autres termes l'ouverture 60 ouvre le premier chemin de passage 34 du côté de la face libre 24. Bien entendu, l'ouverture 60 débouche à l'extérieur du premier dispositif 15. De plus l'ouverture 60 communique respectivement avec les première 35 et deuxième 36 ouvertures du premier chemin 34. Ainsi pour débloquer le lacet 10, il suffit de le solliciter manuellement selon la flèche F3 dans un sens d'éloignement de la tige 3. Ce sens est sensiblement perpendiculaire à la tige 3, en particulier à la languette 9, et aussi perpendiculaire à la face d'appui 23. Le sens de dégagement du lacet 10, en dehors du premier chemin 34, est également sensiblement perpendiculaire au sens de glissement du lacet dans le premier dispositif 15. Des avantages liés à cette structure sont la facilité et la rapidité d'action de déblocage du lacet. Un seul geste suffit pour libérer totalement le lacet 10 du premier dispositif 15.

Bien entendu, pour serrer à nouveau la chaussure 1, il suffit d'introduire à nouveau le lacet 10 dans la première cavité 33 par la première ouverture 60. Cette opération est également facile et rapide. Ensuite la tension du lacet est obtenue, comme on l'a décrit, par traction dans le sens du premier chemin 34.

En complément, le premier dispositif de blocage 15 comprend un passant 61. Celui-ci comprend une extension 62 issue du premier îlot 31, et dirigée vers la première extrémité 19, à l'écart de la face d'appui 23. L'espace compris entre l'extension 62, l'îlot 31 et la face d'appui 23 forme le passant 61. Ce dernier est ouvert, dans le sens où le lacet 10 s'en dégage en même temps qu'il 10 se dégage par l'ouverture 60 du premier chemin de passage 34. Cependant il peut alternativement être prévu de laisser le passant fermé. Selon l'utilisation même du bloqueur le passant peut être supprimé, de façon à avoir seulement l'effet de blocage.

Lorsqu'il glisse dans le chemin 34, le lacet 10 peut glisser aussi dans le passant 61. Ce faisant il 10 glisse dans un plan sensiblement parallèle à la face d'appui 23, ou à la face libre 24, ou encore à la portion de tige sur laquelle est solidarisé le dispositif de blocage. En l'occurrence le glissement du lacet 10, lors de son serrage, se fait dans un plan enveloppe de la languette 9. On remarque que la direction de dégagement du lacet 10 par l'ouverture 60, pour le desserrage de la chaussure, est sensiblement perpendiculaire à ce plan enveloppe. Localement, c'est-à-dire au niveau de chaque dispositif de blocage, le lacet 10 reste dans le plan médian (ou surface enveloppe) de la cavité 33 ou du chemin de passage 34.

Bien entendu, ce qui a été décrit pour le premier dispositif 15 pourrait l'être pour le deuxième 16. Ainsi, pour faciliter la lecture du dessin, on retrouve notamment, en rapport avec ce deuxième dispositif 16, une deuxième cavité 63 définissant un deuxième chemin de passage 64 pour le fil ou lacet, un deuxième organe de blocage 65, un deuxième moyen de guidage 66 du deuxième organe de blocage 65, un deuxième moyen élastique 67, et une deuxième ouverture de dégagement 68.

En complément il est prévu des moyens de solidarisation du ou des dispositifs 15, 16 à la tige 3, c'est-à-dire ici à la languette 9. Ces moyens sont symbolisés par des plots 69, 70 visibles sur la figure 5. Ces plots 69, 70, ménagés du côté de la face d'appui 23, peuvent par exemple recevoir des vis non représentées. Ces dernières peuvent être vissées dans les plots à travers la tige 3. Bien entendu, d'autres moyens de solidarisation sont possibles.

D'une manière générale, l'invention est réalisée à partir de matériaux et selon des techniques de mise en oeuvre connus de l'homme du métier.

En particulier, il est préféré de réaliser chaque composant à partir d'une matière plastique.

Bien entendu l'invention n'est pas limitée à la forme de réalisation ci-avant décrite, et comprend tous les équivalents techniques pouvant entrer dans la portée des revendications qui vont suivre.

En particulier, s'il a été prévu un corps 18 commun à deux dispositifs 15, 16, il peut alternativement être prévu un corps par dispositif.

Il peut aussi être prévu qu'un objet comporte plus de deux dispositifs de blocage.

Dans le cas d'une chaussure, la forme de réalisation décrite est tournée vers une chaussure qui comprend une tige haute. Il peut aussi être prévu que la chaussure présente une tige basse. De plus un dispositif de blocage peut être disposé en tout lieu de la tige.

La chaussure est un élément chaussant. L'invention s'applique aussi à un chausson destiné à être logé dans la chaussure, ou encore à d'autres objets comme des sacs ou des vêtements.

L'invention s'applique à tout dispositif de serrage comportant un dispositif de blocage d'un fil, d'un brin ou d'un lacet.

## Revendications

1. Dispositif de blocage (15) agissant pour au moins un fil (10), le dispositif (15) comportant un corps (18) dont une première cavité (33) définit un premier chemin de passage (34) pour le fil (10), le dispositif (15) comprenant un premier organe de blocage (37), un premier moyen de guidage (38) du premier organe de blocage (37) relativement au corps (18), et un premier moyen élastique (39) prévu pour solliciter le premier organe de blocage (37) dans un sens d'appui sur le brin de fil (10) dans le chemin (34), le dispositif fonctionnant par coopération du premier organe de blocage (37) avec le premier chemin (34) pour le blocage du brin de fil (10) par effet de coincement,
**caractérisé par le fait que** la première cavité (33) est ouverte, de façon à permettre l'introduction ou le dégagement du brin de fil (10) dans une direction autre que celle du chemin (34).

2. Dispositif de blocage (15) selon la revendication 1, **caractérisé par le fait que** le corps (18) comprend une arête longitudinale (30), qui fait saillie du côté d'une face libre (24) du corps, ainsi qu'un premier îlot (31), la première cavité (33) s'étendant entre l'arête longitudinale (30) et le premier îlot (31), une face d'appui (23) définissant le fond de la première cavité (33), la cavité (33) définissant le premier chemin de passage (34) pour le fil (10).

3. Dispositif de blocage (15) selon la revendication 2, **caractérisé par le fait que** l'organe de blocage (37) comprend un secteur (45) logé dans une cavité ouverte (46) du premier îlot (31).

4. Dispositif de blocage (15) selon la revendication 3, **caractérisé par le fait que** le secteur (45) présente une denture (48) prévue pour appuyer sur le fil (10), et **par le fait que** l'arête (30) présente une denture (53) en regard du secteur (45).

5. Dispositif de blocage (15) selon l'une des revendications 3 et 4, **caractérisé par le fait que** le moyen de guidage (38) comprend un pion (49) issu du secteur (45), ainsi qu'un guide (50) ménagé dans la cavité (46) de l'îlot (31), le guide (50) étant prévu pour recevoir et guider le pion (49).

6. Dispositif de blocage (15) selon l'une des revendications 3 à 5, **caractérisé par le fait que** le moyen élastique (39) comprend un ressort (51), le ressort (51) s'étendant dans la cavité (46) du premier îlot (31), entre un premier bord (21) du corps (18) et le secteur (45).

7. Dispositif de blocage (15) selon la revendication 6, **caractérisé par le fait que** le ressort (51) et le secteur (45) sont deux pièces distinctes.

8. Dispositif de blocage (15) selon la revendication 6, **caractérisé par le fait que** le ressort (51) et le secteur (45) forment une pièce monobloc.

9. Dispositif de blocage (15) selon l'une des revendications 2 à 8, **caractérisé par le fait qu'**il comprend un passant (61).

10. Dispositif de blocage (15) selon la revendication 9, **caractérisé par le fait que** le passant (61) comprend une extension (62) issue du premier îlot.

11. Dispositif de blocage (15) selon l'une des revendications 1 à 10, **caractérisé par le fait qu'**il est solidarisé à un deuxième dispositif de blocage (16).

12. Dispositif de serrage d'un fil (10), **caractérisé par le fait qu'**il comprend un dispositif de blocage (15, 16) selon l'une des revendications 1 à 11.

13. Chaussure (1), **caractérisée par le fait qu'**elle comprend un dispositif de blocage (15, 16) selon l'une des revendications 1 à 11.

14. Chaussure (1) selon la revendication 13, **caractérisée par le fait qu'**elle comprend une tige haute.
